**Europäisches Patentamt**

**European Patent Office**

**Office européen des brevets**

(19)

(11) Veröffentlichungsnummer: **0 164 506**
**B1**

(12) # EUROPÄISCHE PATENTSCHRIFT

(45) Veröffentlichungstag der Patentschrift:
**08.06.88**

(51) Int. Cl.⁴: **G 01 F 1/32**

(21) Anmeldenummer: **85103037.9**

(22) Anmeldetag: **15.03.85**

(54) **Verfahren zum Messen des Durchflusses in einer Fluid-Strömung.**

(30) Priorität: **15.05.84 DE 3418035**

(43) Veröffentlichungstag der Anmeldung:
**18.12.85 Patentblatt 85/51**

(45) Bekanntmachung des Hinweises auf die Patenterteilung:
**08.06.88 Patentblatt 88/23**

(84) Benannte Vertragsstaaten:
**AT BE CH DE FR IT LI LU NL SE**

(56) Entgegenhaltungen:
**DE-A-3 220 515**
**DE-A-3 220 539**
**US-A-4 083 242**

(73) Patentinhaber: **Rota Apparate- und Maschinenbau Dr. Hennig GmbH und Co KG, Rheinstrasse 8, D-7867 Wehr/Baden 2 (DE)**

(72) Erfinder: **Weber, Thomas, Dipl.- Ing., Ob der Ziegelhütte 0, D-7531 Neuhausen (DE)**
Erfinder: **Meister, Manfred, Dipl.- Phys., Willmendinger Strasse 44, D-7896 Wutöschingen-Schwerzen (DE)**

(74) Vertreter: **Weber, Otto Ernst, Dipl.- Phys., Hofbrunnstrasse 36, D-8000 München 71 (DE)**

EP 0 164 506 B1

**0 164 506**

### Beschreibung

Die Erfindung betrifft ein Verfahren zum Messen des Durchflusses einer Fluid-Strömung, bei welchem in der Strömung fluidische Oszillationen, insbesondere Kármán-Wirbel, erzeugt werden und mit wenigstens zwei Meßfühlern eine für die Oszillationsfrequenz repräsentative physikalische Größe, wie die Geschwindigkeit oder der Druck, als Meßsignal experimentell ermittelt wird, welches durch Verstärkung, Filterung und/oder ähnlichen Maßnahmen aufbereitet und ausgewertet wird, wobei die Meßfühler so angeordnet werden, daß ihre Ausgangssignale eine Phasendifferenz von 90 bis 270° aufweisen und einer Kreuzkorrelations-Analyse unterworfen werden.

Ein solches Verfahren ist aus der DE-OS 32 20 515 bekannt. Dort werden vor Durchführung einer Messung in einem "Definierschritt" verschiedene Definitions-Parameter festgelegt, um das Meßsignal aus Störsignalen herausfiltern zu können. Insbesondere wird dort auch vorgeschlagen, für Messungen an zwei verschiedenen Meßstellen die relative Phasenlage als Definitions-Parameter heranzuziehen. Auch wird dort vorgeschlagen, die an den Meßstellen ermittelten Signale einer Kreuzkorrelations-Analyse zu unterwerfen und die Lage des ersten Maximums der Kreuzkorrelations-Funktion als Kriterium für die Periodendauer der Wirbelfrequenzsignale heranzuziehen.

Auch aus der DELIWA-Zeitschrift, Heft 8/78 ist ein Gaszähler bekannt, der nach dem Prinzip der Kármán-Wirbelstraße arbeitet. Eine entsprechende Meßanordnung wird auch in dem von der Firma Kent Instruments herausgegebenen "technical paper" TP7513 "The performance and design of Vortex Meters" von T.Cousins (April 1975) beschrieben.

Ein ähnliches Verfahren ist auch aus der DE-OS 28 32 142 bekannt.

Einzelheiten des Korrelations-Analyseverfahrens sind in dem Buch von A.Papoulis, "Random Variables and Stochastic Processes", McGraw-Hill, New York, 1965, beschrieben.

Der vorliegenden Erfindung liegt die Aufgabe zugrunde, das aus der DE-OS 32 20 515 bekannte Verfahren zum Messen des Durchflusses einer Fluid-Strömung so zu verbessern, daß eine besonders einfache, rechnergestützte Auswertung der Meßsignale möglich ist, wobei insbesondere eine kurze Meßzeit und ein geringer Speicherbedarf im Rechner ermöglicht werden sollen.

Gemäß der Erfindung wird diese Aufgabe dadurch gelöst daß die Lagen der kleinsten negativen Funktionswerte des Realteiles der Kreuzleistungsdichtefunktion zur Ermittlung der Wirbelfrequenzsignale herangezogen werden.

Diese erfindungsgemäße Maßnahme ermöglicht eine besonders einfache und zuverlässige Ermittlung der gesuchten Frequenz der Wirbelfrequenzsignale. Dabei werden die Meßfühler vorteilhaft so angeordnet, daß die Phasendifferenz der Meßfühler-Ausgangssignale, also der Wirbelfrequenzsignale, 180° beträgt. In diesem Falle ist dann der Realteil der Kreuzleistungsdichtefunktion der betreffenden Frequenzlinie kleiner als Null. Dieses einfache Kriterium, das für Wirbelfrequenzsignale mit einer Phasendifferenz im Bereich von 90 bis 270° zutrifft, gestattet eine besonders einfache Auswertung des Kreuzleistungsdichtespektrums. Eine weitere Vereinfachung des Meßverfahrens im Hinblick auf die erforderliche Meßzeit und den Speicherbedarf im Rechner wird dann erzielt, wenn der zur Messung der Wirbelfrequenzsignale erforderliche Frequenzbereich in Teilbereiche aufgeteilt wird, wobei diese Teilbereiche vorzugsweise so gewählt werden, daß sich die maximalen Frequenzen zweier benachbarter Teilbereiche um den Faktor 2 unterscheiden, und daß die zur Gewinnung der digitalen Kreuzleistungsdichtefunktion notwendige Quantisierung der zeitlich variablen Meßfühlersignale mit von Teilbereich zu Teilbereich angepaßter Abtastrate erfolgt, wobei die Abtastrate ein Vielfaches, zumindest das Doppelte, der maximalen Frequenz des zu analysierenden Teilbereiches beträgt.

In einer anderen vorteilhaften Ausgestaltung der Erfindung wird auch der zur Messung der Wirbelfrequenzsignale erforderliche Frequenzbereich wie beschrieben unterteilt, während zur Gewinnung der digitalen Kreuzleistungsdichtefunktion die erforderliche Quantisierung der Meßfühlersignale mit konstanter Abtastrate erfolgt, die zumindest das Doppelte der maximalen Frequenz der Wirbelfrequenzsignale beträgt, wobei zur Berechnung der digitalen Kreuzleistungsdichtefunktion für die einzelnen Teilbereiche nicht mehr alle gewonnenen Quantisierungswerte berücksichtigt werden, sondern die Anzahl entsprechend der im zugehörigen Teilbereich notwendigen Frequenzauflösung vermindert wird.

In einer weiteren vorteilhaften Ausgestaltung des erfindungsgemäßen Verfahrens werden die Meßsignale in Rechteck-, Sinus- oder Dreiecksignale mit jeweils konstanter Amplitude umgewandelt. Nach dieser Umwandlung in "Normsignale" werden als Quantisierungswerte nur noch zwei Zustände (0 bzw. 1) erhalten, was den Rechenaufwand bei der Gewinnung der Kreuzleistungsdichtefunktion erheblich vermindert, da nur 1-bit-Multiplikationen notwendig sind.

Durch die eingangs beschriebene Aufteilung der Frequenz-Meßbereiche in aneinander anschließende Teilbereiche und die angepaßte Abtastrate wird ein quasi konstanter Abstand von benachbarten Frequenzlinien erreicht, so daß die relative Meßgenauigkeit im gesamten Meßbereich erhalten bleibt.

Nachfolgend ist das erfindungsgemäße Verfahren anhand der Zeichnung näher beschrieben.

Dabei zeigt:

Fig. 1    das Leistungsdichtespektrum eines Amplitudenprozesses $x_1(t)$;

Fig. 2    den Verlauf der Kreuzkorrelationsfunktion;

Fig. 3    den Verlauf des Realteiles des Kreuzleistungsdichtespektrums;

Fig. 4    das Kreuzleistungsdichtespektrum von Nutz- und Störsignal; und

Fig. 5    die Kreuzkorrelationsfunktion bei gleichzeitigem Nutz- und Störsignal.

2

Zur Durchführung des erfindungsgemäßen Verfahren zum Messen des Durchflusses in einer Fluid-Strömung wird in einer Rohrleitung diametral ein Wirbelkörper angebracht. Zwei Sensoren, welche auf Geschwindigkeitsänderungen bzw. Druckänderungen im Fluid ansprechen, werden so in bezug auf den Wirbelkörper angeordnet, daß sie die sich alternierend am Wirbelkörper ablösenden Wirbel erkennen. Dabei werden die Sensoren so angeordnet, daß ihre Meßsignale um etwa 180° phasenverschoben sind. Diesen Nutzsignalen sind vielfältige Störsignale überlagert, die das Nutzsignal im Gesamtsignal bis zur Unkenntlichkeit verschwinden lassen.

Die erfindungsgemäß vorgesehene Kreuzkorrelations-Analyse unter Verwendung des Kreuzleistungsdichtespektrums wird nachfolgend näher erläutert.

### 1. Signalmodell

Die beiden normierten Meßsignale (Wirbelsignale) $s_1(t)$ und $s_2(t)$ sind folgendermaßen zu charakterisieren. Es sind Zufallssignale, die mit der Wirbelfrequenz $\omega_D$ moduliert sind. Die Amplituden der Signale haben näherungsweise eine Gaußverteilung und weisen eine Bandbreite auf, die wesentlich unter $\omega_D$ liegt. Damit lassen sie sich als Schmalbandprozesse darstellen:

$$s_1(t) = x_1(t)\cos(\omega_D t + \varphi_1) - y_1(t)\sin(\omega_D t + \varphi_1) \tag{1}$$

$$s_2(t) = x_2(t)\cos(\omega_D t + \varphi_2) - y_2(t)\sin(\omega_D t + \varphi_2) \tag{2}$$

Darin sind

$x_1(t)\cos(\omega_D t + \varphi_1)$ das In-Phase-Signal

und

$y_1(t)\sin(\omega_D t + \varphi_1)$ das Quadrature-Signal

des ersten Signals $s_1(t)$. Das Signal $s_2(t)$ setzt sich aus zwei entsprechenden Komponenten zusammen. In den Gleichungen (1) und (2) ist $\omega_D$ die gesuchte Wirbelfrequenz (Kreisfrequenz $\omega_D = 2\pi\, f_D$). $\varphi_1$ und $\varphi_2$ sind zwei zunächst beliebige Phasenterme. $x_1(t)$ bzw. $x_2(t)$ und $y_2(t)$ bzw. $y_2(t)$ sind stochastische Amplitudenprozesse, die noch näher zu erläutern sind.

Bei den Phasentermen $\varphi_1$ und $\varphi_2$ sind nicht deren Absolutwerte von Interesse, sondern nur deren Differenz

$$\emptyset = \varphi_1 - \varphi_2$$
$$H16 > (3) > H$$

Ohne Einschränkung der Allgemeingültigkeit kann $\varphi_2$ zu Null gesetzt werden. Die resultierende Phase $\emptyset$ ist durch konstruktive Anordnung der Sensoren so festgelegt daß sie nominell einen Wert von 180° hat.

$$\emptyset = 180° \tag{4}$$

In dem auftretenden Frequenzbereich ist jedoch eine Abweichung von diesem Nominalwert von bis zu $\pm\,90°$ möglich. Daraus resultiert schließlich:

$$90° < \emptyset < 270° \tag{5}$$

Die Gleichungen (4) und (5) werden Auswirkungen bezüglich der Unterscheidung einer Nutzfrequenz von einer Störfrequenz haben.

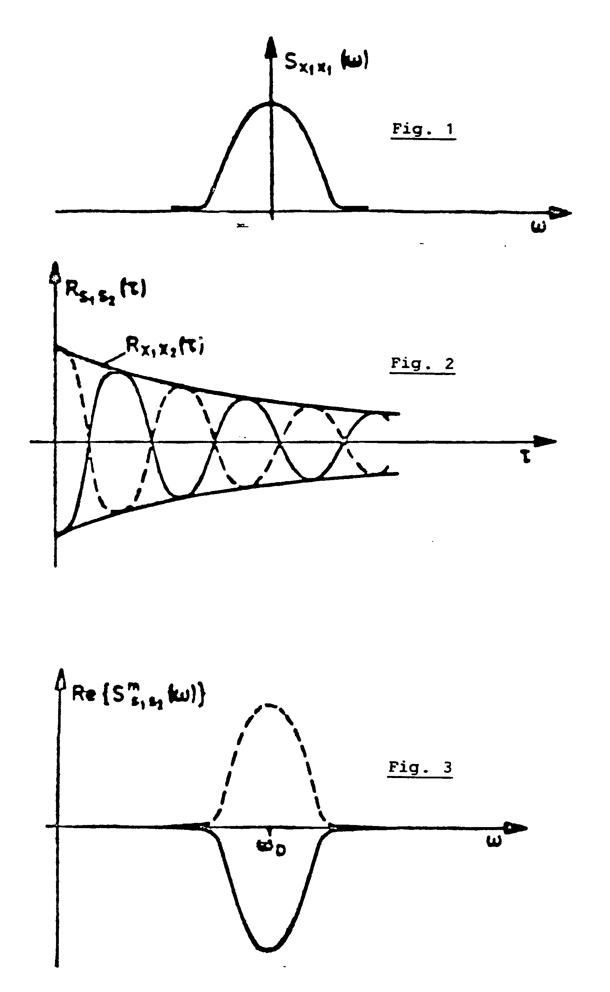

Die Amplitudenprozesse $x_1(t)$ bis $y_2(t)$ sind Tiefpaßprozesse mit dem in Fig. 1 dargestellten Leistungsdichtespektrum.

Für die Amplitudenprozesse eines einzelnen Meßsignales wird folgendes angenommen:

$$S_{X1XX}(\omega) = S_{Y1Y1}(\omega) \text{ und} \tag{6}$$

$$S_{X1Y1}(\omega) = 0. \tag{7}$$

Für das zweite Meßsignal gelten obige Gleichungen entsprechend.

Von Bedeutung sind an dieser Stelle auch die Kreuzleistungsdichtespektren bzw. die Kreuzkorrelationsfunktionen der Tiefpaßprozesse $x_1(t)$ bis $y_2(t)$. Im Grunde wird der Idealfall von identischen Amplituden der Meßsignale durch das Prinzip der Meßapparatur (Sensor, Meßwerterfassung und Meßwertvorverarbeitung) angestrebt. Dies bedeutet, daß sich im Idealfall die Signale in den Gleichungen (1) und (2) nur durch deren Phasen voneinander unterscheiden. Damit läßt sich die Theorie (Papouli s A: Probability, Random Variables and Stochastic Processes. McGraw-Hill, New York, 1965) auf zwei Signale erweitern.

$$S_{X1X2}(\omega) = S_{Y1Y2}(\omega) = S_{X1X1}(\omega) = S_{X1X2}(\omega) \tag{8}$$

bzw.

$$R_{X1X2}(\tau) = R_{Y1Y2}(\tau) = R_{X1X1}(\tau) = R_{X2X2}(\tau) \tag{9}$$

Die Kreuzkorrelationsfunktion $R_{X1X2}(\tau)$ ist damit eine gerade Funktion (und reell). Daraus ergibt sich $S_{X1X2}(\omega)$ ebenfalls als reelle und gerade Funktion, wie in Fig. 1 für $S_{X1X1}(\omega)$ angedeutet.

Gemäß Fig. 1 seien die Prozesse $x_1(t)$ bis $y_2(t)$ zumindest näherungsweise bandbegrenzt, mit einer Bandbreite, die kleiner als $\omega_D$ ist. Mit diesen Ausführungen sind die Voraussetzungen für die Zusammenhänge zwischen Spektrum bzw. Korrelationsfunktion einerseits und der gesuchten Wirbelfrequenz andererseits bereitgestellt.

2. Kriterium für die Nutzfrequenzen im Kreuzleistungsdichtespektrum und in der Kreuzkorrelationsfunktion

2.1 Kreuzkorrelationsfunktion

Gemäß Papoulis A. Probability, Random Variables and Stochastic Processes. McGraw-Hill, New York, 1965, gilt für die Kreuzkorrelationsfunktion $R(\tau)$ zweier stochastischer Signale folgender Zusammenhang:

$$R_{S1S2}(\tau) = E[s_1(t+\tau)s_2(t)] \tag{10}$$

Einsetzen der Gleichungen (1) und (2) in Gl.(10) ergibt mit $\varphi_2 = 0$ und $\varphi_1 = \emptyset$ sowie unter Berücksichtigung von (7) bis (9):

$$R_{S1S2}(\tau) = R_{X1X2}(\tau) \cos(\omega_D \tau + \emptyset) \tag{11}$$

In Gl.(11) ist $R_{X1X2}(\tau)$ die Kreuzkorrelationsfunktion der Tiefpaßprozesse $x_1(t)$ und $x_2(t)$. Der Term $\cos(\omega_D + \emptyset)$ drückt die Modulation der Korrelationsfunktion mit der gesuchten Wirbelfrequenz aus.

Die Kreuzkorrelationsfunktion ist also eine periodische Funktion ($\omega_D$) mit einer abklingenden Amplitude $R_{X1X2}(\tau)$. Aus den Nulldurchgängen dieser Funktion läßt sich die gesuchte Wirbelfrequenz $\omega_D$ bestimmen. Der Einfluß der Phase $\emptyset$ und damit die Unterscheidungsmöglichkeit von Nutz- und Störfrequenz ist noch zu untersuchen.

Die mit Gl. (11) ausgedrückte Kreuzkorrelationsfunktion hat den in Fig. 2 dargestellten prinzipiellen Verlauf (unter Berücksichtigung von Gl. (9)). In Fig. 2 ist das Nutzsignal mit durchgezogener Linie dargestellt, während das Störsignal gestrichelt gezeichnet ist. Die Phase des Nutzsignals beträgt 180° und die Phase des Störsignals 0°. Man erkennt aus Fig. 2 sofort, daß sowohl Nutz- als auch Störsignal periodische Korrelationsfunktionen aufweisen. Zur Unterscheidung von Nutz- und Störsignal ließe sich im Falle eines isolierten Signals die Richtung des Nulldurchganges auswerten; bei gleichzeitigem Vorkommen scheidet jedoch diese Möglichkeit aus was noch gezeigt wird.

2.2 Kreuzleistungsdichtespektrum

Dazu wird aus Gl. (11) das Kreuzleistungsdichtespektrum mittels Fourier-Transformation gebildet. Zunächst wird Gl. (11) umgeformt:

$$R_{S1S2}(\tau) = \tfrac{1}{2} R_{X1X2}(\tau) \cdot [e^{j(\omega_D \tau + \emptyset)} + e^{-j(\omega_D \tau + \emptyset)}] \tag{12}$$

Fourier-Transformation von Gl. (12) ergibt:

$$S_{S1S2}(\omega) = \tfrac{1}{2}[S_{X1X2}(\omega-\omega_D) e^{j\emptyset} + S_{X1X2}(\omega+\omega_D) e^{-j\emptyset}] \tag{13}$$

$$S_{S1S2}(\omega) = \tfrac{1}{2}\cos\emptyset \, [S_{X1X2}(\omega-\omega_D) + S_{X1X2}(\omega+\omega_D)] + j\tfrac{1}{2}\sin\emptyset \, [S_{X1X2}(\omega-\omega_D) - S_{X1X2}(\omega+\omega_D)] \tag{14}$$

Da $x_1(t)$ und $x_2(t)$ sehr ähnlich sind was durch das Prinzip der Meßwerterfassung bedingt und durch Auswertung von Meßergebnissen bestätigt ist, ist $S_{X1X2}(\omega)$ näherungsweise reell und gerade und um die Frequenz $\omega = 0$ zentriert (Fig.1). Die Wirbelfrequenz $\omega_D$ bewirkt gemäß Gl. (13) bzw. Gl. (14) eine Verschiebung dieses Tiefpaßspektrums. Meßtechnisch sind nur positive Frequenzen erfaßbar, so daß in den Gl. (13) und (14) nur die Verschiebung nach rechts von Bedeutung ist. Ein gemessenes Spektrum sieht deshalb folgendermaßen aus:

$$S^m_{S1S2}(\omega) = S_{X1X2}(\omega-\omega_D) \cos\emptyset + j \, S_{X1X2}(\omega-\omega_D) \sin\emptyset \tag{15}$$

Bei dem Maximum des gemessenen Kreuzleistungsdichtespektrums findet man die gesuchte Frequenz $\omega_D$ (Fig.3).

In Fig. 3 ist das Nutzsignal (Phase: 180°) mit durchgezogener Linie gezeichnet, während das Störsignal (Phase: 0°) gestrichelt gezeichent ist.

In Fig. 3 ist der Realteil des Kreuzleistungsdichtespektrums prinzipiell dargestellt

$$\text{Re}\ \{S^m{}_{S1S2}(\omega)\} = S_{X1X2}(\omega\text{-}\omega_D)\ \cos\ \emptyset \tag{16}$$

Dieser Realteil weist nun die bemerkenswerte Eigenschaft auf, daß er für Phasen mit $-90° < \emptyset < +90°$, d.h. für ein Störsignal, positiv ist, während er bei einem Nutzsignal, das eine Phase gemäß Gl. (5) hat, negativ wird. Damit lassen sich Nutz- und Störsignal in einfacher aber eindeutiger Weise voneinander unterscheiden.

### 2.3 Überlagerung von Nutzsignal und Störung

Bisher wurde der Fall betrachtet daß nur eine einzige Frequenz entweder Nutz- oder Störfrequenz, gemessen wird. Es soll jetzt betrachtet werden, wie sich das gleichzeitige Auftreten von Nutz- und Störsignal auf die beiden in Betracht gezogenen Kennfunktionen auswirkt.

Dazu werden die Gleichungen (1) und (2) in vereinfachter Form erweitert.

$$s_1(t) = s_{1N}(t) + s_{1S}(t) \tag{17}$$

$$s_2(t) = s_{2N}(t) + s_{2S}(t) \tag{18}$$

Index N: Nutzsignal
Index S: Störsignal

Werden Nutz- und Störsignal als voneinander statistisch unabhängig angenommen, erhält man daraus in Anlehnung an die Gleichungen (11) und (16) die zugehörige Kreuzkorrelationsfunktion und das Kreuzleistungsdichtespektrum:

$$R_{S1S2}(\tau) = R_{XNXN}(\tau)\ \cos(\omega_N\tau + \emptyset_N) + R_{XSXS}(\tau)\ \cos(\omega_S\tau + \emptyset_S) \tag{19}$$

$$\text{Re}\ \{S^m{}_{S1S2}(\omega)\} = S_{XNXN}(\omega\text{-}\omega_N)\ \cos\ \emptyset_N + S_{XSXS}(\omega\text{-}\omega_S)\ \cos\ \emptyset_S \tag{20}$$

Wenn gilt

$$90° < \emptyset_N < 270° \tag{21}$$
$$-90° < \emptyset_S < 90°$$

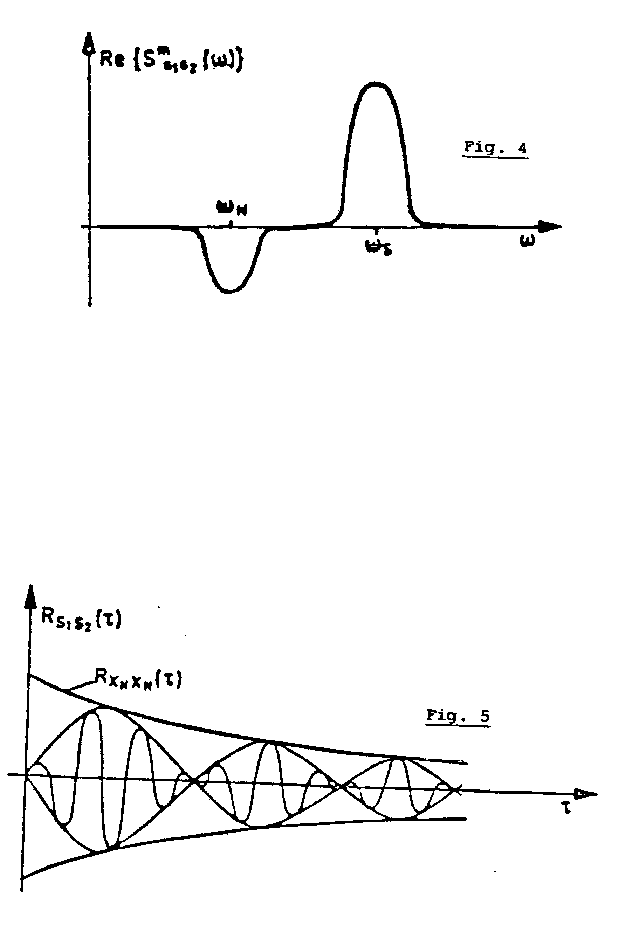

hat der in Gl. (20) ermittelte Realteil das Kreuzleistungsdichtespektrum das in Fig. 4 dargestellte typische Aussehen.

Im Spektrum treten zwei Extremwerte auf, deren Vorzeichen entscheiden, ob die zugehörige Frequenz von einem Nutz- oder Störsignal herrührt. Die Unterscheidung ist also eindeutig möglich, auch im Fall, daß die Störung dominant ist. Ausgenommen ist dann der Fall, daß $\omega_N = \omega_S$ ist.

Abschließend wird die Kreuzkorrelationsfunktion aus Gl. (19) für den folgenden Fall betrachtet:

$$\emptyset_N = 180°$$

$$\emptyset_S = 0° \tag{822}$$

$$R_{XNXN}(\tau) = R_{XSXS}(\tau)$$

In Gl. (22) ist bezüglich der Phasen $\emptyset_N$ und $\emptyset_S$ der für die Unterscheidung der Signale günstigste Fall angenommen. Die Annahme der Ähnlichkeit der Korrelationsfunktion der Amplitudenprozesse geschieht aus vereinfachenden Gründen. Mit Gl. (22) folgt aus Gl. (19):

$$R_{S1S2}(\tau) = R_{XNXN}(-\cos(\omega_N\tau) + \cos(\omega_S\tau)) \tag{23}$$

Umformung vom Gl. (23) ergibt

$$R_{S1S2}(\tau) = -2\ R_{XNXN} \cdot \sin(\tfrac{\omega_S-\omega_N}{2}\tau) \cdot \sin(\tfrac{\omega_S+\omega_N}{2}\tau) \tag{24}$$

Aus Gl. (24) erkennt man, daß die Kreuzkorrelationsfunktion jetzt aus zwei periodischen Anteilen besteht. Ein höherfrequenter Anteil mit der Mittenfrequenz von Nutz- und Störsignal stellt die eigentliche Modulation dar.

Der andere Teil mit der halben Differenzfrequenz ist als langsam veränderlicher Vorgang der Amplitude zuzuordnen, so daß sich letztlich der in Fig. 5 dargestellte Verlauf ergibt.

Aus Gl. (24) folgt ganz klar, daß die schnellen Nulldurchgänge der Kreuzkorrelationsfunktion von beiden Frequenzen abhängen. Daraus läßt sich dann keine Unterscheidung von $\omega_N$ und $\omega_S$ vornehmen. Man müßte zusätzlich die langsameren Nulldurchgänge (Knotenpunkte) der Amplitude auswerten, um eine Identifikation der Frequenzen zu ermöglichen. Diese Methode ist jedoch vom praktischen Standpunkt auszuschließen, wie experimentelle Untersuchungen gezeigt haben.

3. Theoretische und praktische Ermittlung von Meßzeit und Genauigkeit bei Auswertung des Kreuzleistungsdichtespektrums.

Die Verwendung des Kreuzleistungsdichtespektrums wurde oben hinreichend begründet. Deshalb beziehen sich die folgenden Ausführungen nur noch auf diese Methode der Signalverarbeitung.

Der entscheidende Parameter, der bestimmt werden muß, ist die benötigte Meßzeit unter der Randbedingung eines möglichst algorithmischen Aufwandes, da dieser die Rechenzeit vorgibt, woraus schließlich die eigentliche Meßzeit resultiert. Unter Meßzeit sei also hier die Zahl der Perioden der Signale verstanden, die ausgewertet werden müssen.

3.1 Forderung einer Genauigkeit von 10 %

3.1.1  Voll aufgelöste Signale Ausgehend von der geforderten Genauigkeit und dem zugrunde liegenden Meßbereich werden zunächst die theoretischen Parameter bei voll aufgelösten Signalen angegeben. Benötigt werden dazu die Zusammenhänge zwischen Zeit- und Frequenzbereich bei der diskreten Fouriertransformation (Rabiner, L.; Gold, B.: Theory and Application of Digital Signal Processing. Prentice-Hall, 1975.

Die erste benötigte Gleichung bezieht sich auf die Auflösung im Frequenzbereich in Abhängigkeit von der Meßzeit.

$$\Delta f = \frac{1}{T} = \frac{1}{N \cdot \Delta t} \tag{25}$$

$\Delta f$: Minimaler Abstand der diskreten Spektrallinien
T : Meßzeit (Zahl der Perioden)
H: Zahl der Abtdastwerte im Zeitbereich
$\Delta t$: Abtastzeit

Der zweite Teil der Gl. (25) ist trivial und braucht keiner weiteren Erklärung. Die nächste Gleichung bezieht sich auf die erfaßbare Bandbreite und die benötigte Abtastzeit:

$$\Delta t = \frac{1}{B} \tag{26}$$

B : Bandbreite der Signale

Die Gleichungen (25) und (26) sind nun auf den gewünschten Meßbereich mit der geforderten Genauigkeit anzuwenden. Der Meßbereich ist durch folgendes Verhältnis der minimalen und maximalen Wirbelfrequenz gekennzeichnet:

$$f_{min} : f_{max} = 1 : 50 \tag{27}$$

$f_{min}$ : minimale Wirbelfrequenz

$f_{max}$ : maximale Wirbelfrequenz

Ein typischer Meßbereich ist hier:

$$f_{min} = 20Hz \leqslant f_D \leqslant 1000Hz = f_{max} \tag{28}$$

Für den Meßbereich in Gl. (28) wird bei 10 %-iger Genauigkeit eine Auflösung

$$\Delta f = 10\% \, f_{min} = 2Hz \tag{29}$$

benötigt. Daraus resultiert die Meßzeit

$$T = \frac{1}{\Delta f} = 500 \text{ ms} \tag{30}$$

Die Abtastzeit $\Delta t$ ergibt sich aus

6

$$\Delta t = \tfrac{1}{B} = \tfrac{1}{2\,f_{max}} = 0,5 \text{ ms} \tag{31}$$

Schließlich ist die Zahl der Abtastwerte N, die wesentlichen Einfluß auf den algorithmischen Aufwand (Rechenzeit) hat, anzugeben

$$N = 1000. \tag{32}$$

Die in den obigen Gleichungen ermittelten theoretischen Parameter gewährleisten auch im praktischen Fall (s. Ergebnisse) die geforderte Genauigkeit. Voraussetzung sind allerdings voll aufgelöste Signale.

Statistische Fehlerabschätzung

In den vorangehenden Gleichungen wurden die Parameter aufgrund einer geforderten Auflösung von 10 % im Frequenzbereich einer vorgegebenen Bandbreite der Signale ermittelt. Das gesuchte Kreuzleistungsdichtespektrum berechnet sich aus den diskreten Fouriertransformierten der beiden Signale (Rabiner, L.; Gold, B: Theory and Application of Digital Signal Processing. Prentice-Hall, 1975).

$$\hat{S}_{S1S2}(f_k) = S_1(f_k) \cdot S_2^*(f_k) \tag{33}$$

$f_k$ : diskrete Spektrallinien

$S_1(f_k) = FIG \{s_1(t)\}$ : Fouriertransformation

$S_2(f_k) = FIG \{s_2(t)\}$ : Fouriertransformation

$S_2^*(f_k)$ konjugiert komplexe Funktion zu $S_2(f_k)$

Die beiden Fouriertransformierten $S_1(f_k)$ und $S_2(f_k)$ berechnen sich aus einer endlichen Zahl von Abtastwerten (endliche Meßzeit $T = N \cdot \Delta t$) aus stochastischen Signalen $s_1(t)$ und $s_2(t)$, so daß sowohl $S_1(f_k)$ und $S_2(f_k)$ als auch $\hat{S}_{S1S1}(f_k)$ gemäß Gl. (33) statistische Größen sind. Der Schätzwert in Gl. (33) ist erwartungstreu. Seine Streuung ist von der Zahl der Mittelungen abhängig (Bendat, J.; Piersol, A. Random Data: Analysis and Measurement Procedures. Wiley-Interscience, 1971). Unter Mittelungen ist einmal zu verstehen, daß mehrere zeitlich hintereinander liegende oder verschachtelte Meßzeiten $T_i$ gemäß Gl. (33) ausgewertet werden und daraus dann ein Mittelwert für $\hat{S}_{S1S2}(f_k)$ gebildet wird. Andererseits kann auch eine Mittelung im Frequenzbereich stattfinden, indem mehr Spektrallinien als zunächst notwendig berechnet werden. Daraus läßt sich dann ein mittlerer Wert für einen Frequenzabschnitt ermitten.

Der normalisierte Fehler $\varepsilon_r$ des Schätzwertes $S_{s_1s_2}(f_k)$ ergibt sich in Abhängigkeit der Mittelungen zu (Bendat, J.: Piersol, A. Random Data: Analysis and Measurement Procedures. Wiley-Interscience, 1971; Bendat, J. Piersol, A. Measurement and Analysis of Random Data. John Wiley, 1966):

$$\varepsilon_r = \frac{\sigma[\hat{S}_{S1S2}(f_k)]}{S_{S1S2}(f_k)} = \sqrt{\tfrac{m}{N}} \cdot \frac{1}{|\gamma_{S1S2}(f_k)|} \tag{34}$$

$\sigma[\ ]$  : Streuung
$N$  : Anzahl der Abtastwerte (Gl. (32))
$N/m$  : Zahl der Mittelungen im Zeit- bzw. Frequenzbereich
$\gamma_{S1S2}(f_k)$  : Kohärenzkoffizient

Die Gleichungen (29) bis (32) ergeben einen Wert vom $\tfrac{N}{m} = 50$. Mit $|\gamma_{S1S2}(f_k)| = 1$ folgt daraus eine Streuung von

$$\varepsilon_r = 14 \%$$

Dieser Wert bezieht sich auf die Genauigkeit jeder einzelnen Spektrallinie. Bei der hier zugrunde liegenden Aufgabe ist jedoch nicht die einzelne Spektrallinie, sondern vielmehr der Gesamtverlauf des Spektrums von Interesse. Es muß ja nur ein Maximum erkannt werden, das höher liegt als die Nachbarwerte. Unter der Annahme, daß der Spektralwert des wahren Maximums doppelt so groß ist wie die Werte der benachbarten Frequenzen, darf der auftretende Fehler im ungünstigsten Fall bis zu 25 % betragen. Dies entspricht einem Konfidenzintervall von ca. $1,8 \cdot \varepsilon_r$, in welches mit etwa 90 %-iger Sicherheit das Meßergebnis fällt.

3.1.2 1-Bit quantisierte Signale

Die Messungen mit 1-Bit quantisierten Signalen (siehe Ergebnisse) ergaben, daß die geforderte Genauigkeit mit den oben angegebenen Parametern nicht zu erreichen war. Als erstes mußte die Abtastzeit auf die Hälfte reduziert werden.

$$\Delta^* = \Delta t/2 = 0{,}25 \text{ ms} \tag{35}$$

Diese Bedingung wird sofort klar, wenn man bedenkt, daß bei 1-Bit quantisierten Signalen die Frequenzwerte aus den Nulldurchgängen berechnet werden. Um diese entsprechend genau zu erfassen, muß die Abtastzeit hinreichend klein sein. Da die Meßzeit aus Gl. (30) auch bei quantisierten Signalen keinesfalls unterschritten werden kann verdoppelt sich jetzt die Anzahl der Abtastwerte N. Ein sicheres Meßergebnis (stets Unterscheidung von Nutz- und Störfrequenz) wurde aber nur erreicht wenn T und damit auch N um 25 % erhöht wurden

$$T^* = 625 \text{ ms} \tag{36}$$
$$N^* = 2500$$

Mit den Parametern der Gleichungen (35) und (36) wird die geforderte Genauigkeit bei 1-Bit quantisierten Signalen erreicht. Der Rechenaufwand, der sich aus den N = 2500 Abtastwerten ergibt, ist allerdings beträchtlich hoch und wird in Absatz 4 durch ein spezielles Verfahren mit variabler Abtastzeit verringert.

### 3.2 Forderung einer Genauigkeit von 1 %

Bei dieser Genauigkeitsforderung kann auf die theoretischen Zusammenhänge zwischen Meßzeit, Genauigkeit und Bandbreite bei voll aufgelösten Signalen verzichtet werden. Vielmehr werden die Ergebnisse der praktischen Messungen von 1-Bit aufgelösten Signalen angegeben. Zunächst ist jedoch anzumerken, daß zur Messung mit 1 %-iger Genauigkeit das Ergebnis der 10 %-igen Genauigkeit ausgenutzt werden darf.
Die ermittelten Parameter werden zunächst an einem speziellen Beispiel demonstriert und danach verallgemeinert.
Mit 10 %-iger Genauigkeit sie eine Frequenz $f_D$

$$f = 30 \text{ Hz} \tag{37}$$

geschätzt worden. Das heißt die exakte Frequenz liegt im Bereich

$$27 \text{ Hz} \leqslant f_D \leqslant 33 \text{ Hz} \tag{38}$$

Aus praktischen Gründen wird man den Bereich

$$25 \text{ Hz} \leqslant f_D \leqslant 35 \text{ Hz} \tag{39}$$

für die Feinachätzung (1 % genau) untersuchen. Damit ist eine Mindestauflösung im Spektralbereich von

$$\Delta f = 1 \% \, 25 \text{ Hz} = 0{,}25 \text{ Hz} \tag{40}$$

erforderlich. Die Meßzeit ergibt sich daraus zu
$$T = \tfrac{1}{\Delta f} = 4 \text{s} \tag{41}$$

Die theoretische Abtastzeit ergibt sich wiederum aus

$$\Delta t = \tfrac{1}{B} = \tfrac{1}{2 \cdot 35 \text{ Hz}} = 14 \text{ ms} \tag{42}$$

Aus praktischen Gründen (1-Bit-Signale; Störungen) mußte $\Delta t$ auch hier verringert werden

$$\Delta t^* \approx 8 \text{ ms} \tag{43}$$

Damit erhält man die Zahl der Abtastwerte N zu

$$N = 500 \tag{44}$$

Zur Sicherheit sind N und T um 10 % zu erhöhen

$$T^* = 4{,}4 \text{ s} \tag{45}$$
$$N^* = 550$$

Die Ergebnisse aus dem Gleichungen (37) bis (45) sind jetzt zu verallgemeinern. Der zu untersuchende Frequenzbereich bei einem 10 % genauen Schätzwert $f_D$ ist folgendermaßen eingegrenzt

$$f_D \cdot (1\text{-}15 \%) \leqslant f_D \leqslant f_D \cdot (1 + 15 \%) \tag{46}$$

Δf ergibt sich dann zu

$$\Delta f = 1\% (1\text{-}15\%)\, f_D \tag{47}$$

Die Meßzeit erhält man aus

$$T = (1 + 10\%)\tfrac{1}{\Delta f} \tag{48}$$

Der Wert für die Abtastzeit ermittelt sich aus

$$\Delta t \approx 55\% \cdot \tfrac{1}{2 \cdot f_D (1 + 15\%)} \tag{49}$$

Daraus ergibt sich schließlich N zu

$$N = \tfrac{T}{\Delta t} = \tfrac{(1+10\%)\,2 \cdot f_D \cdot (1+15\%)}{1\%(1\text{-}15\%)\cdot f_D \cdot 55\%} = 541 \tag{50}$$

Die vorstehenden theoretischen Überlegungen sind experimentell bestätigt worden.

4. Abschätzung des algorithmischen Aufwandes (Rechenzeit) und des Speicherplatzbedarfs bei 1-Bitquantisierten Signalen.

Ausgangspunkt für diesen Absatz ist die Zahl N* = 2500 für die Anzahl der Abtastwerte aus Gl. (36), die zu verarbeiten sind. Zur Berechnung des Kreuzspektrums zweier Signale aus diesen Abtastwerten gibt es auf einem Digitalrechner die Möglichkeit der diskreten Fourier Transformation (DFT) oder der schnellen Fourier Transformation (FFT), (Rabiner, L.; Gold, B. Theory and Application of Digital Signal Processing. Prentice-Hall,1975). Größenordnungsmäßig liegt der algorithmische Aufwand (komplexe Multiplikationen und Additionen) bei der DFT bei

$$N^2 \text{ Operationen} \tag{51}$$

und bei der FFT bei

$$N \cdot \log_2 N \text{ Operationen} \tag{52}$$

Die Rechenzeit ergibt sich aus dem Produkt der Operationszahl multipliziert mit der Rechnersystemzeit

$$T_R = N_o \cdot T_s \tag{53}$$

$T_R$: Rechenzeit
$N_o$: Zahl der Operationen
$T_s$: Systemzeit für eine Operation (inklusive Speicherzugriff)

Die Systemzeit $T_s$ hängt nicht so sehr von der Art der Operation (Multiplikation oder Addition), sondern vielmehr von der Zahlendarstellung ab, die ihrerseits die Genauigkeit des Ergebnisses beeinflußt. Der für die Verarbeitung der Signale gewählte Rechner benötigt für eine Integeroperation eine Zeit von

$$T_s^I \approx 50\,\mu s \tag{54}$$

und für eine Gleitkommaoperation eine Zeit von

$$T_s^G \approx ms = 40 \cdot T_s^I \tag{55}$$

Unter dem Aspekt der 1-Bit-Quantisierung der Signale sind bei vergleichbarer Genauigkeit bei der DFT Integeroperation möglich, während bei der FFT Gleitkommaoperationen notwendig sind.
Die Auswertung der Gl.(53) mit den Zahlenwerten aus den Gleichungen (55), (52) und (36) ergibt für die FFT (komplexe Operationen!) eine Zeit von

$$T_R \approx 100\,s \tag{56}$$

Für die DFT ergibt sich eine Zeit, die sogar noch um den Faktor 3 (1-Bit-Quantisierung) darüberliegt. Dies sind Rechenzeiten, die für die praktische Anwendung völlig indiskutabel sind. Man kann also weder die DFT noch die FFT in ihrer Reinform direkt auf das vorliegende Problem anwenden. Durch Ausnutzung einiger Vereinfachungen und der Abtastung mit variabler Abtastfrequenz ist eine Reduzierung der Rechenzeit mindestens um den Faktor 100 möglich.
Die nächstliegende Verringerung des Aufwandes läßt sich durch Ausdünnen der zu berechnenden Spektrallinien bei der Fourier Transformation erreichen. In Gl. (29) ist eine Auflösung von Δf = 2 Hz im

9

Frequenzbereich angegeben. Diese Auflösung ist für den unteren Meßbereich notwendig, bedeutet jedoch für den oberen Meßbereich eine unnötig große Genauigkeit, die Ursache für die große Rechenzeit ist. Für die über den gesamten Bereich geforderte Genauigkeit von 10 % sind also statt 500 Spektrallinien lediglich etwa 50 notwendig, die allerdings nicht äquidistant sein dürfen. Damit und mit der Tatsache, daß in der Gl. (56) von einer Zahl N* = 2500 von Spektrallinien ausgegangen wurde, ergibt sich bereits eine Verringerung der Rechenzeit etwa um den Faktor 50. Diese Ausdünnung der Spektrallinien ist nicht mit der FFT, bei der nur in der letzten Stufe eine Vereinfachung möglich ist, sondern nur mit der DFT durchführbar. Die DFT ist also in diesem Fall der sonst üblichen FFT vorzuziehen. Für die DFT gilt der folgende Zusammenhang zwischen Zeit- und Frequenzbereich:

$$X(f_k) = \sum_{n=0}^{N-1} x(t_n)\, e^{-j\frac{2\pi}{N}nk} \qquad k = 0,1,\dots,N-1$$

X : Fourier Transformierte
x : Zeitsignal
$f_k = k\cdot\Delta f$ : Diskrete Spektrallinien
$t_n = n\cdot\Delta t$ : Diskrete Zeitwerte

Aus Gl. (57) erkennt man sofort, daß eine Ausdünnung der Spektrallinien bei der DFT problemlos ist. Weiterhin erkennt man in Gl. (57), daß zur Berechnung von jeder Spektrallinie alle Abtastwerte verarbeitet werden. Da sich die Abtastrate nach dem oberen Meßbereich orientiert (Gl. 31), werden im unteren Frequenzbereich unnötig viele Signalwerte verarbeitet. Mit Hilfe der DFT, auch hier wiederum im Gegensatz zur FFT, kann durch Auslassen von Abtastwerten im unteren Frequenzbereich eine Verkürzung der Rechenzeit erreicht werden. Noch effektiver ist es, von vorneherein für diesen Bereich weniger Werte abzutasten, was durch eine bereits erwähnte variable Abtastfrequenz möglich ist. Die Art und Weise der Variation der Abtastfrequenz kann unter der Prämisse einer möglichst geringen Rechenzeit optimiert werden. Im folgenden wird eine stufenweise Vergrößerung der Abtastzeit vorgeschlagen, die vielleicht nicht das Optimum darstellt, womit jedoch eine praktische brauchbare Rechenzeit erreicht wird. Dazu wird der Meßbereich in Segmente unterteilt, die durch ein Verhältnis

$$f_{imin} : f_{imax} = 1 : 2 \tag{58}$$

$$i = 1,\dots,6$$

gekennzeichnet sind. Mit den 6 Segmenten aus Gl. (58) ergibt sich ein Gesamtmeßbereich von

$$f_{min} : f_{max} = 1 : 2^6 = 1 : 64 \tag{59}$$

der sogar über den geforderten Bereich von 1 : 50 hinausgeht. Die nachfolgende Tabelle zeigt einerseits die Unterteilung des Meßbereichs und andererseits die nominell geforderten Parameter (Gleichungen (29) bis (32)) bzw. die aufgrund der 1-Bit-Quantisierung modifizierten Parameter (Gleichungen (35) und (36)).

| | Frequenz- | 1000 Hz- | 500 Hz | 250 Hz | 125 Hz | 62,5 Hz | 31,25 Hz | 31,25 Hz |
|---|---|---|---|---|---|---|---|---|
| | Parameter | -500 Hz | -250 Hz | -125 Hz | -62,5 Hz | -31,25 Hz | -15,62 Hz | -20 Hz |
| a) | $\Delta f$ | 50 H | 25 Hz | 12,5 Hz | 6,25 Hz | 3,125 H | 1,5625 Hz | 2 Hz |
| | B | 2000 Hz | 1000 Hz | 500 Hz | 250 Hz | 125 Hz | 62,5 Hz | 62,5 Hz |
| | $T = \frac{1}{\Delta f}$ | 20 ms | 40 ms | 80 ms | 160 ms | 320 ms | 640 ms | 500 ms |
| b) | $\Delta t = \frac{1}{B}$ | 0,5 ms | 1 ms | 2 ms | 4 ms | 8 ms | 16 ms | 16 ms |
| | $N = \frac{B}{\Delta t} = \frac{T}{\Delta t}$ | 40 | 40 | 40 | 40 | 40 | 40 | 31,25 |
| | $\Delta t^*$ | 0,25 ms | 0,5 ms | 1 ms | 2 ms | 4 ms | 8 ms | 8 ms |
| c) | $N^*$ | 100 | 100 | 100 | 100 | 100 | 100 | 78,125 |
| | $T^*$ | 25 ms | 50 ms | 100 ms | 200 ms | 400 ms | 800 ms | 625 ms |
| | $T^{**}$ | 25 ms | 25 ms | 50 ms | 100 ms | 200 ms | 400 ms | 225 ms |
| d) | $\Delta t^* = \frac{1}{f^*}$ | 40 Hz | 20 Hz | 10 Hz | 5 Hz | 2,5 Hz | 1,25 Hz | 1,6 Hz |
| | $B^* = \frac{1}{\Delta t^*}$ | 4000 Hz | 2000 Hz | 1000 Hz | 500 Hz | 250 Hz | 125 Hz | 125 Hz |

Tabelle 1: Unterteilung des Gesamtmeßbereichs in Segmente und dazugehörige Parameter

a) Forderungen: Auflösung und Bandbreite
b) Aus a) sich ergebende nominelle Werte
c) Notwendige Modifikationen wegen 1-Bit-Quantisierung
d) Folgerungen, die sich aus den Modifikationen in c) ergeben

Wie in der vorstehenden Tabelle angegeben, wird erst der obere Frequenzbereich durch schnelle Abtastung und zum Schluß erst der untere Frequenzbereich verarbeitet. Dies hat zum einen den Vorteil, daß bereits nach kurzer Meßzeit $T^*_1$ (25 ms) der erste Meßbereichsabschnitt analysiert werden kann, während für den nächsten Abschnitt noch Signalwerte abgetastet werden. Zum anderen sind die Abtastwerte für die oberen Meßbereiche auch für die langsameren Bereiche nutzbar, wenn sie entsprechend ausgedünnt werden. Man kann also jeweils die Hälfte der Werte des einen Meßbereichs in den nächst langsameren Bereich übernehmen und auf diese Art Meßzeit sparen. Mit $T^{**}$ ist in der Tabelle die Meßzeit angegeben, die bei Ausnutzung der Akkumulation (jeweils Halbierung) der Werte des vorangehenden Bereichs tatsächlich benötigt wird. Die $N^* = 100$ Werte eines Meßbereichs erhält man aus 50 Werten, die mit der für diesen Bereich spezifischen Abtastrate gesammelt werden, und aus 50 Werten, die aus dem vorangehenden Bereich stammen und ihrerseits auf diese Art entstanden sind.

Die Gesamtmeßzeit $T_G$ ergibt sich aus der Tabelle zu:

$$T_G = \sum_{i=1}^{6} T_i^{**} = 800 \text{ ms} \tag{60}$$

Dieser Wert stimmt nur deshalb nicht mit dem Wert aus Gl. (36) überein, weil der unterste Meßbereich bis 15,625 Hz ausgedehnt wurde. Wird dieser Bereich nach unten auf 20 Hz beschränkt, ergibt sich exakt die gleiche Meßzeit.

Die Fourier-Transformierte eines jeden Frequenzbereiches der vorstehenden Tabelle errechnet sich gemäß Gl. (57). Darin ist $N = 100$ und $k$ nimmt die Werte zwischen 10 und 19 an, d.h. es werden nur 10 Spektrallinien pro Frequenzbereich benötigt ($f_{imin} + 10 \cdot 10 \% f_{imin} = f_{imax}$).

Mit diesen Ausführungen läßt sich der Aufwand von Rechenoperationen mit Hilfe der Gl. (57) rasch ermitteln. Die Abtastwerte $x(t_n)$ in Gl. (57) nehmen nur die Werte

$$x(t_n) = 0 \text{ oder } 1$$

an. Es brauchen also keine Multiplikationen ausgeführt werden, lediglich die komplexen Koeffizienten müssen addiert werden. Für eine Spektrallinie sind also im Mittel (100 Werte 0 oder 1)

50 komplexe Additionen

auszuführen. Für einen Frequenzbereich bedeutet dies im Mittel

1000 Integeradditionen

pro Signal. Bei zwei Signalen und 6 Frequenzbereichen ergeben sich schließlich

12000 Integeradditionen.

Zusätzlich sind noch 120 Multiplikationen und 60 Additionen bei der Bildung des Realteils des Kreuzleistungsdichtespektrums zu berücksichtigen

$$S_{xy}(f_k) = X(f_k) \cdot Y^*(f_k) \tag{61}$$

$$\text{Re} \{S_{xy}(f_k)\} = X_R(f_k) \cdot Y_R(f_k) + X_I(f_k) \cdot Y_I(f_k)$$

$X_R, Y_R$ : Realteile     der Fourier-Transformatiobn
$X_I, Y_I$ : Imaginärteile     aus Gl. (57)

Bei einer Systemzeit $T_s^I = 50 \text{ μs}$ (Gl. (54)) erhält man eine Rechenztit gemäß Gl. (53):

$$T_R = 12180 \cdot T_s^I \approx 600 \text{ ms}$$

Die Gesamtmeßzeit setzt sich bei der vorstehend angegebenen Vorgehensweise nicht einfach aus Abtastzeit plus Rechenzeit zusammen, da eine gewisse Verzahnung dieser beiden Zeiten durch die Segmentierung möglich ist. Im Grunde genommen ist sogar eine Echtzeitverarbeitung möglich, da die Rechenzeit pro Segment

11

nur etwa 100 ms beträgt und ab dem dritten Segment die Meßzeit bereits gleich bzw. wesentlich größer wird. Die für das Problem maßgebende Zeit ist also die benötigte Signalzeit (Gl. (60) bzw. (36)) und nicht die Rechenzeit. Der Speicherplatzbedarf beläuft sich auf N = 600 Abtastwerte und 5 x 60 Spektralwerte. Für eine effektive Verarbeitung sollte bei den komplexen Koeffizienten der Gl. (57) auf eine Indexrechnung verzichtet werden und statt dessen mehr Speicherplaz reserviert werden. Gemäß Gl. (57) sind dann 10 x 100 komplexe Koeffizienten (2k) abzuspeichern. Damit ergibt sich ein Speicherplatzbedarf von etwa 3k für den Wertebereich.

Das erfindungsgemäße Messverfahren läßt sich somit wie folgt zusammenfassen:

Zunächst erfolgt eine Grobschätzung des Messwertes auf ± 10 Prozent mit Hilfe der Kreuzleistungsanalyse und anschließend erfolgt die "Feinmessung" auf eine Genauigkeit die besser ist als ± 10 Prozent, wobei die Messignale zuvor mit einem schmalbandigen Bandpass gefiltert werden.

Auch kann alternativ mit dem Kreuzleistungsanalysator die "Feinmessung" ausgeführt werden wozu lediglich die Abtastrate der Quantisierung zu erhöhen ist. Da bereits der Messwert auf ± 10 Prozent bekannt ist, genügt es in diesem Fall, nur wenige Frequenzlinien zu berechnen, was eine erhebliche Einsparung an Rechenzeit ermöglicht.

**Patentansprüche**

1. Verfahren zum Messen des Durchflusses in einer Fluid-Strömung,
bei welchem in der Strömung fluidische Oszillationen, insbesondere Kármán-Wirbel, erzeugt werden und mit wenigstens zwei Meßfühlern eine für die Oszillationsfrequenz repräsentative physikalische Größe wie die Geschwindigkeit oder der Druck, als Meßsignal experimentell ermittelt wird, welches durch Verstärkung, gegebenenfalls Filterung und/oder ähnliche Maßnahmen aufbereitet und ausgewertet wird, wobei die Meßfühler so angeordnet werden, daß ihre Ausgangssignale eine Phasendifferenz von etwa 90° bis 270° aufweisen und einer Frequenz-Analyse unterworfen werden, dadurch gekennzeichnet, daß die Lage des kleinsten negativen Funktionswertes des Realteils der Kreuzleistungsdichte-Funktion zur Ermittlung der Wirbelfrequenz herangezogen wird.

2. Verfahren nach Anspruch 1 dadurch gekennzeichnet, daß die Meßsignale in Rechteck-, Sinus- oder Dreiecksignale mit jeweils konstanter Amplitude umgewandelt werden.

3. Verfahren nach einem der vorhergehenen Ansprüche, dadurch gekennzeichnet, daß die Phase der Kreuzleistungsdichtefunktion bestimmt wird und als zusätzliches Kriterium für die Identifikation der Wirbelfrequenz dient.

4. Verfahren nach einem der vorhergehenden Ansprüche, dadurch gekennzeichnet, daß die Werte der Kreuzleistungsdichtefunktion im zur Ermittlung der Wirbelfrequenz erforderlichen Frequenzbereich nur für solche Frequenzwerte ermittelt werden, deren relativer Abstand innerhalb eines vorgebbaren Toleranzbereiches konstant ist.

5. Verfahren nach einem der vorhergehenden Ansprüche, dadurch gekennzeichnet, daß der zur Messung der Wirbelfrequenz erforderliche Frequenzbereich in Teilbereiche unterteilt wird, wobei diese Teilbereiche z. B. so gewählt werden, daß sich die maximalen Frequenzen zweier benachbarter Teilbereiche um den Faktor 2 unterscheiden, und daß die zur Gewinnung der digitalen Kreuzleistungsdichtefunktion notwendige Quantisierung der zeitlich variablen, gewandelten oder nicht gewandelten Meßfühlersignale mit von Teilbereich zu Teilbereich angepaßter Abtastrate erfolgt, wobei der Wert der Abtastrate zumindest doppelt so groß ist wie der Wert der maximalen Frequenz des zu analysierenden Teilbereiches.

6. Verfahren nach einem der Ansprüche 1 bis 4, dadurch gekennzeichnet, daß der zur Messung der Wirbelfrequenz erforderliche Frequenzbereich in Teilbereiche unterteilt wird, wobei diese Teilbereiche z. B. so gewählt werden, daß sich die maximalen Frequenzen zweier benachbarter Teilbereiche um den Faktor 2 unterscheiden und daß die zur Gewinnung der digitalen Kreuzleistungsdichtefunktion notwendige Quantisierung der zeitlich variablen, gewandelten oder nicht gewandelten Meßfühlersignale mit konstanter Abtastrate erfolgt, die mindestens das Doppelte der maximalen Wirbelfrequenz beträgt, wobei zur Berechnung der digitalen Kreuzleistungsdichtefunktion für die einzelnen Teilbereiche nicht alle gewonnenen Quantisierungswerte berücksichtigt werden, sondern die Anzahl der zur Berechnung der digitalen Kreuzleistungsdichtefunktion herangezogenen Quantisierungswerte entsprechend der in dem zugehörigen Teilbereich notwendigen Frequenzauflösung vermindert wird.

**Claims**

1. A method for measuring the flow rate in a fluid flow field, with which method fluidic oscillations, in particular Karman vortices, are generated in said flow field, and with at least two probe sensors for experimentally determining as a measuring signal a physical parameter, e.g. velocity or pressure, representative of the oscillation frequency, said signal being processed and evaluated by amplifying and, if necessary, filtering and/or similar measures, said probe sensors being arranged such that their output signals have a phase difference of 90° to 270° and are subjected to frequency analysis, characterized in that the position of the smallest negative value of the function of the real component of the cross-power density function is used to determine the vortex frequency.

2. The method according to claim 1, <u>characterized in that</u> said measuring signals are converted to rectangular, sinus or triangular signals with constant amplitudes in each case.

3. The method according to one of the preceding claims, <u>characterized in that</u> the phase of the cross-power density function is determined and used as an additional criterion to identify the vortex frequency.

4. The method according to one of the preceding claims, <u>characterized in that</u> the values of said cross-power density function in the frequency range necessary to determine the vortex frequency, are determined for those frequency values only, the relative distances of which are constant within a tolerance range to be determined.

5. The method according to one of the preceding claims, <u>characterized in that</u> the frequency range necessary to determine the vortex frequency is divided into sub-ranges, said sub-ranges being for example, selected such that the maximum frequency values of two adjacent sub-ranges differ by the factor 2 and that the quantification of the sensor output signals, variable in time, converted or not converted, necessary to obtain the digital cross-power density function is carried out at a scanning rate adapted to each sub-range, the value of the scanning rate being at least twice the maximum frequency value of the sub-range to be analyzed.

6. The method according to one of the claims 1 to 4, <u>characterized in that</u> the frequency range necessary to determine the vortex frequency is divided into sub-ranges, said sub-ranges being, for example, selected such that the maximum frequency values of two adjacent sub-ranges differ by the factor 2 and that the quantification of the sensor output signals, variable in time, converted or not converted, necessary to determine the digital cross-power density function is carried out at a constant scanning rate being at least twice the maximum vortex frequency value and that not all the quantification values obtained are considered for calculating the digital cross-power density function, but that the number of quantification values used to calculate the digital cross-power density function is reduced in relation to the frequency resolution necessary in the respective sub-range.


## Revendications

1. Procédé pour mesurer le débit dans un écoulement fluide, dans lequel on produit des oscillations fluidiques dans l'écoulement, en particulier des tourbillons de Karman, et, avec au moins deux capteurs de mesure, on détermine expérimentalement, en tant que signal de mesure, une grandeur physique représentative de le fréquence des oscillations, par exemple la vitesse ou la pression, signal qui est préparé et évalué par amplification, éventuellement par filtrage et/ou des techniques analogues; où les capteurs de mesure sont disposés de façon que leurs signaux de sortie présentent un déphasege de 90 à 270° et soient soumis à une analyse en séries de Fourier, caractérisé en ce qu'on utilise, pour déterminer la fréquence des tourbillons, la position de la valeur négative la plus faible de la partie réelle de la fonction de densité spectrale de puissance.

2. Procédé selon la revendication 1, caractérisé en ce que les signaux de mesure sont convertis en des signaux rectangulaires, sinusoidaux ou triangulaires, chacun ayant une amplitude constante.

3. Procédé selon l'une des revendications précédentes, caractérisé en ce qu'on détermine la phase de le fonction de densité spectrale de puissance, qui sert, à titre de critére supplémentaire, à l'identification de la fréquence des tourbillons.

4. Procédé selon l'une des revendications précédentes, caractérisé en ce qu'on détermine les valeurs de la fonction de densité spectrale de puissance dans l'intervalle de fréquences nécessaire à la détermination de la fréquence des tourbillons, seulement pour les valeurs de la fréquence dont la distance relative est constante à l'intérfeur d'un intervalle de tolérances prédéfinissable.

5. Procédé selon l'une des revendications précédentes, caractérisé en ce que l'intervelle de fréquences nécessaire à la mesure de la fréquence des tourbillons est subdivisé en intervalles partiels, ces intervalles partiels étant choisis par exemple de façon que les fréquences maximales de deux intervalles partiels voisins se distinguent l'un de l'autre par le facteur 2, et que la quantification, nécessaire à l'obtention de le fonction numérique de densité spectrele de puissance, des signaux des capteurs de mesure, variables dans le temps, convertis ou non-convertis, s'effectue selon une vitesse d'exploration adaptée d'un intervalle partiel à un autre intervalle partiel, la valeur de la vitesse d'exploration étant au moins deux fois plus importante que la valeur de la fréquence maximale de l'intervalle partiel à analyser.

6. Procédé selon l'une des revendications 1 à 4, caractérisé en ce que l'intervalle de fréquences nécessaire à le mesure de la fréquence des tourbillons est subdivisé en intervalles partiels, ces intervalles partiels étant choisis par exemple de façon que les fréquences maximales de deux intervalles partiels voisins se distinguent par lé facteur 2, et que la quantification, nécessaire à l'obtention de le fonction numérique de densité spectrale de puissance, des signaux des cepteurs de mesure, variables dans le temps, convertis ou non-convertis, s'effectue à une vitesse d'exploration constante, qui soit au moins le double de la fréquence maximale des tourbillons, toutes les valeurs de quantificetion obtenues n'étant pas prises en compte pour le calcul de le fonction numérique de densité spectrale de puissance pour les différents intervalles partiels, mais plutôt le nombre des veleurs de quantification utilisées pour le calcul de la fonction numérique de densité spectrale de puissance est diminué, en fonction de la décomposition des fréquences, nécessaire dans l'intervalle partiel considéré.

Fig. 1

Fig. 2

Fig. 3

Fig. 4

Fig. 5